# EUROPÄISCHE PATENTSCHRIFT

(11) **EP 3 981 239 B1**
(45) Veröffentlichungstag und Bekanntmachung des Hinweises auf die Patenterteilung: **08.10.2025**
(21) Anmeldenummer: 21211567.9
(22) Anmeldetag: 24.05.2018
(51) Int. Cl.: A01C 17/00, A01C 21/00

(54) **VERFAHREN ZUM PLANEN UND/ODER AUSFÜHREN EINES DÜNGUNGSVORGANGS**
METHOD FOR PLANNING AND/OR EXECUTING A FERTILIZING PROCEDURE
PROCÉDÉ DE PLANIFICATION ET/OU DE MISE EN OEUVRE D'UN PROCESSUS D'APPORT D'ENGRAIS

(30) Priorität: 31.05.2017 DE 102017111889
(43) Veröffentlichungstag der Anmeldung: 13.04.2022
(62) Teilanmeldung aus: 20188043.2
(73) Patentinhaber: Amazonen-Werke H. Dreyer SE & Co. KG, 49205 Hasbergen (DE)
(72) Erfinder: Kielhorn, Arnd, 49090 Osnabrück (DE); Scheufler, Bernd, 49205 Hasbergen (DE)

(56) Entgegenhaltungen:
- EP-A1- 3 017 681
- WO-A1-01/45490
- DE-A1- 102014 108 561

## Beschreibung

Die Erfindung betrifft ein Verfahren zum Planen und/oder Ausführen eines Düngungsvorgangs nach dem Oberbegriff des Patentanspruchs 1.

Bei der Ausbringung von Dünger auf landwirtschaftliche Nutzflächen besteht regelmäßig die Notwendigkeit, eine Mehrzahl von unterschiedlichen Nährstoffen auszubringen. Zur Ausbringung unterschiedlicher Nährstoffe werden häufig Düngermischungen aus zumindest zwei Düngersorten eingesetzt.

Bei entsprechenden Düngermischungen weisen die unterschiedlichen Düngersorten häufig abweichende Wurf- und/oder Flugeigenschaften auf, sodass es unmittelbar nach dem Abwurf der Düngermischung zu einer Entmischung der Düngersorten kommt. Die Entmischung ist beispielsweise auf unterschiedliche Korngrößen und/oder -gewichte der Düngersorten zurückzuführen, woraus sich voneinander abweichende Beschleunigungswerte und Flugkurven ergeben.

Um diesem Problem zu begegnen, schlägt die Druckschrift DE 10 2014 108 561 A1 vor, mittels einer Bildauswertung die Verteilung von Düngerkörnern zu bestimmen, um den Grad der Entmischung bzw. den Veränderungsgrad der ursprünglich homogenen Mischung eines Mischdüngers nach dem Ausstreuen festzustellen. Die EP 3 017 681 A1 offenbart ein Verfahren nach dem Oberbegriff des Anspruchs 1.

Obwohl die Erfassung einer Fehlapplikation bereits möglich ist, existiert noch keine praxistaugliche Lösung, mit welcher diese Problematik überwunden werden kann. Die Optimierung des Ausbringergebnisses durch die Verwendung von Düngermischungen, deren Düngersorten ähnliche Wurf- und/oder Flugeigenschaften aufweisen, ist nur begrenzt möglich und führt zu einer erheblichen Einschränkung bei der Auswahl geeigneter Düngersorten.

Die Aufgabe der vorliegenden Erfindung besteht somit darin, die homogene Ausbringung von zumindest zwei Nährstoffen im Rahmen eines Düngungsvorgangs zu vereinfachen.

Die Aufgabe wird gelöst durch ein Verfahren der eingangs genannten Art, wobei ein zweiter Ausbringvorgang geplant und/oder ausgeführt wird nach den kennzeichnenden Merkmalen des Anspruchs 1.

Die Erfindung macht sich die Erkenntnis zunutze, dass die während eines ersten Ausbringvorgangs erzeugten Ungleichmäßigkeiten in der Nährstoffverteilung durch einen zweiten Ausbringvorgang erheblich reduziert werden können, wenn die durch den ersten Ausbringvorgang erzeugten Ungleichmäßigkeiten in der Nährstoffverteilung vor dem zweiten Ausbringvorgang bekannt sind. Durch eine entsprechende Auswahl des Ausgleichsdüngers sowie durch eine geeignete Anpassung der Abwurfcharakteristik lässt sich durch den zweiten Ausbringvorgang die Gleichmäßigkeit in der Nährstoffverteilung erheblich steigern. Im Gegensatz zu den bekannten Ansätzen wird folglich nicht versucht, in einem ersten Ausbringvorgang eine Düngermischung auszubringen, deren Düngersorten eine möglichst geringe Entmischung aufweisen. Vielmehr wird die Fehlapplikation während des ersten Ausbringvorgangs toleriert und durch einen entsprechend angepassten zweiten Ausbringvorgang ausgeglichen. Somit werden Ertragsverluste durch Ungleichmäßigkeiten in der Nährstoffverteilung erheblich reduziert.

Vorzugsweise wird der zweite Ausbringvorgang vor dem Planen und/oder Ausführen des ersten Ausbringvorgangs geplant und/oder ausgeführt. Die Ungleichmäßigkeiten in der Nährstoffverteilung basieren vorzugsweise auf den unterschiedlichen Wurf- und/oder Flugeigenschaften der Düngersorten der Düngermischung. Das erfindungsgemäße Verfahren erlaubt ohne Weiteres die Ausbringung einer Düngermischung, welche eine pulvrige Düngersorte und eine grobkörnige Düngersorte umfasst. Der Ausgleichsdünger kann beispielsweise ein Einzelnährstoffdünger oder ein Mehrnährstoffdünger sein. Ferner kann der Ausgleichsdünger eine Düngermischung sein. Insbesondere kann der Ausgleichsdünger die Düngermischung sein, dessen Ausbringung im Rahmen des ersten Ausbringvorgangs geplant und/oder ausgeführt wurde.

In einer bevorzugten Ausführungsform des erfindungsgemäßen Verfahrens umfasst das Planen und/oder Ausführen des ersten Ausbringvorgangs das Eingeben oder Auswählen einer Düngermischung und/oder das Eingeben oder Auswählen der zumindest zwei Düngersorten der Düngermischung. Das Eingeben oder Auswählen der Düngermischung und/oder der zumindest zwei Düngersorten der Düngermischung kann an der landwirtschaftlichen Verteilmaschine, der Zug- oder Trägermaschine der landwirtschaftlichen Verteilmaschine oder von einem externen Gerät, wie beispielsweise einem mobilen Endgerät, erfolgen. Vorzugsweise sind die Wurf- und/oder Flugeigenschaften von mehreren Düngermischungen und/oder Düngersorten auf einem Speicher hinterlegt, sodass durch die Eingabe oder die Auswahl der Düngermischung und/oder der zumindest zwei Düngersorten der Düngermischung ein Abwurfbild berechnet werden kann, aus welchem Ungleichmäßigkeiten in der Nährstoffverteilung zumindest eines ersten Nährstoffs der Düngermischung abgeleitet werden können.

In einer anderen Ausführungsform des erfindungsgemäßen Verfahrens umfasst das Erfassen von Ungleichmäßigkeiten in der Nährstoffverteilung zumindest des ersten Nährstoffs der Düngermischung entsprechend des geplanten und/oder ausgeführten ersten Ausbringvorgangs das Anordnen von einem oder mehreren Auffangbehältern auf einer Probefläche, das Ausführen einer Probeausbringung der Düngermischung auf der Probefläche und/oder das Auswerten des Inhalts des einen oder der mehreren Auffangbehälter nach dem Ausführen der Probeausbringung. Insbesondere, wenn die Wurf- und/oder Flugeigenschaften der Düngermischung oder der zumindest zwei Düngersorten der Düngermischung nicht bekannt sind oder aufgrund von äußeren Einflüssen, wie beispielsweise Feuchtigkeit, mit einer Abweichung von bekannten Wurf- und/oder Flugeigenschaften zu rechnen ist, erlaubt die Probeausbringung der Düngermischung das Erfassen von Ungleichmäßigkeiten in der Nährstoffverteilung, welche letztendlich auf die unterschiedlichen Wurf- und/oder Flugeigenschaften der zumindest zwei Düngersorten der Düngermischung zurückgehen. Durch die Anzahl und die Beabstandung der eingesetzten Auffangbehälter auf der Probefläche kann die Genauigkeit der Erfassung der Ungleichmäßigkeiten durch Auswerten des Inhalts der Auffangbehälter nach dem Ausführen der Probeausbringung eingestellt werden. Die Genauigkeit der Erfassung von Ungleichmäßigkeiten in der Nährstoffverteilung steigt mit zunehmender Anzahl von ausgewerteten Auffangbehältern sowie mit abnehmendem Abstand benachbarter Auffangbehälter auf der Probefläche an.

In einer Weiterbildung des erfindungsgemäßen Verfahrens umfasst das Erfassen von Ungleichmäßigkeiten in der Nährstoffverteilung zumindest des ersten Nährstoffs der Düngermischung entsprechend des ausgeführten ersten Ausbringvorgangs das Ausführen einer spektralen Analyse des Pflanzenbestands vor oder während dem Planen und/oder Ausführen des zweiten Ausbringvorgangs. Die Reflexions-Eigenschaften von Pflanzenbeständen werden unter anderem von ihrem Nährstoff-Ernährungszustand beeinflusst. Beispielsweise wird während der spektralen Analyse des Pflanzenbestands das von den Pflanzen reflektierte Sonnenlicht erfasst. Über den Vergleich mit dem direkt einfallenden Sonnenlicht kann die Analyse bei unterschiedlichen und/oder wechselnden Lichtverhältnissen ausgeführt werden. Die durch die Lichtmessung erzeugten Daten können dann an ein Spektrometer übermittelt werden, welches eine spektrale Zerlegung vornimmt und die Daten entsprechend analysiert. Beispielsweise kann somit der Stickstoff-Ernährungszustand von Pflanzenbeständen erfasst und/oder überwacht werden. Werden Ungleichmäßigkeiten in dem Ernährungszustand eines Pflanzenbestands festgestellt, ist dies regelmäßig auf Ungleichmäßigkeiten in der Nährstoffverteilung zurückzuführen. In diesem Fall kann eine Ausgleichsdüngung zum Reduzieren der Ungleichmäßigkeiten in der Nährstoffverteilung ausgeführt und/oder geplant werden.

Außerdem ist ein erfindungsgemäßes Verfahren bevorzugt, bei welchem das Erfassen von Ungleichmäßigkeiten in der Nährstoffverteilung zumindest des ersten Nährstoffs der Düngermischung entsprechend des geplanten und/oder ausgeführten ersten Ausbringvorgangs das Bereitstellen von Streuparametern, welche den Düngerauswurf beeinflussen, für eine Auswerteeinrichtung, das Bereitstellen von Wurf- und/oder Flugeigenschaften der Düngermischung für eine Auswerteeinrichtung und/oder das Bereitstellen von Wurf- und/oder Flugeigenschaften der zumindest zwei Düngersorten für eine Auswerteeinrichtung. Die Streuparameter der Verteilmaschine, welche den Düngerauswurf beeinflussen, umfassen beispielsweise die Rotationsgeschwindigkeit der Wurfscheibe, die Ausrichtung oder Anordnung von Wurfschaufeln, den Aufgabepunkt des Düngers auf die Wurfscheibe oder die Düngermenge. Die Wurf- und/oder Flugeigenschaften der Düngermischung und/oder der zumindest zwei Düngersorten können deren Struktur, deren Korngewicht, deren Kornform und/oder deren Korndichte umfassen. Die Wurf- und/oder Flugeigenschaften der Düngermischung und/oder der zumindest zwei Düngersorten können deren Mengenverteilung bei vorgegebenen Streuparametern umfassen.

In einer vorteilhaften Weiterbildung des erfindungsgemäßen Verfahrens umfasst das Erfassen von Ungleichmäßigkeiten in der Nährstoffverteilung zumindest des ersten Nährstoffs der Düngermischung entsprechend des geplanten und/oder ausgeführten ersten Ausbringvorgangs das Berechnen der Ungleichmäßigkeiten in der Nährstoffverteilung zumindest des ersten Nährstoffs der Düngermischung unter Berücksichtigung der bereitgestellten Streuparameter, der bereitgestellten Wurf- und/oder Flugeigenschaften der Düngermischung und/oder der bereitgestellten Wurf- und/oder Flugeigenschaften der zumindest zwei Düngersorten durch die Auswerteeinrichtung. Beispielsweise erfolgt die Berechnung von Ungleichmäßigkeiten in der Nährstoffverteilung zumindest des ersten Nährstoffs der Düngermischung auf Basis von einer oder mehreren Berechnungsformeln.

In einer weiteren Ausführungsform des erfindungsgemäßen Verfahrens umfasst das Ausführen des zweiten Ausbringvorgangs das Anzeigen der Nährstoffverteilung zumindest des ersten Nährstoffs der Düngermischung entsprechend des geplanten und/oder ausgeführten ersten Ausbringvorgangs. Das Anzeigen der Nährstoffverteilung zumindest des ersten Nährstoffs der Düngermischung kann beispielsweise mittels eines Displays oder Touchscreens erfolgen, wobei der Display oder Touchscreen Bestandteil der landwirtschaftlichen Verteilmaschine, Bestandteil einer die landwirtschaftliche Verteilmaschine ziehenden oder tragenden Maschine oder Bestandteil eines externen Geräts, beispielsweise eines mobilen Endgeräts, sein kann. Die Nährstoffverteilung zumindest des ersten Nährstoffs der Düngermischung kann dabei beispielsweise in Listenform oder nach Art einer topografischen Karte angezeigt werden. Alternativ oder zusätzlich umfasst das Planen und/oder Ausführen des zweiten Ausbringvorgangs das Anzeigen eines Fahrgassenvorschlags für den zweiten Ausbringvorgang. Durch den Fahrgassenvorschlag kann eine versetzte Fahrgasse zum Ausgleich der Ungleichmäßigkeiten genutzt werden. Dies ist insbesondere dann vorteilhaft, wenn der Ausgleichsdünger der zuvor ausgebrachten Düngermischung entspricht. Alternativ oder zusätzlich umfasst das Planen und/oder Ausführen des zweiten Ausbringvorgangs das Anzeigen eines Einstellungsvorschlags für die Streuparameter der Verteilmaschine für den zweiten Ausbringvorgang. Die Einstellung der Streuparameter dient zur Anpassung der Querverteilung und somit zum Ausgleich der beim ersten Ausbringvorgang tolerierten Fehlapplikation der Düngermischung. Der Einstellungsvorschlag für die Streuparameter der Verteilmaschine kann beispielsweise einen Vorschlag für die Rotationsgeschwindigkeit der Streuscheibe und/oder einen Vorschlag für die Ausrichtung von einer oder mehreren auf der Streuscheibe angeordneten Wurfschaufeln umfassen.

Bevorzugt ist außerdem ein erfindungsgemäßes Verfahren, bei welchem das Ausführen des zweiten Ausbringvorgangs das Erzeugen eines Steuerungssignals zur Anpassung von Streuparametern der Verteilmaschine auf Grundlage der erfassten Ungleichmäßigkeiten in der Nährstoffverteilung, das selbsttätige Anpassen von Streuparametern der Verteilmaschine auf Grundlage des erzeugten Steuerungssignals und/oder das selbsttätige Steuern der Verteilmaschine oder einer die Verteilmaschine tragenden oder ziehenden Maschine zur Einhaltung einer zum Reduzieren der erfassten Ungleichmäßigkeiten geeigneten Fahrgasse, umfasst. Durch das selbsttätige Anpassen von Streuparametern der Verteilmaschine und/oder das selbsttätige Steuern der Verteilmaschine oder der die Verteilmaschine tragenden oder ziehenden Maschine wird der Komfort beim Ausführen des Düngungsvorgangs weiter gesteigert, da die notwendigen Eingriffe eines Maschinenbedieners reduziert werden. Ferner können die erfassten Ungleichmäßigkeiten durch die Ausbringung des Ausgleichsdüngers auf diese Weise in einem noch höheren Maße ausgeglichen werden, da Fehleinstellungen der Streuparameter der Verteilmaschine durch einen Maschinenbediener und/oder Steuerungsfehler eines Maschinenbedieners ausgeschlossen werden.

Das erfindungsgemäße Verfahren wird ferner dadurch vorteilhaft weitergebildet, dass das Anpassen von Streuparametern der Verteilmaschine das Einstellen einer geeigneten Rotationsgeschwindigkeit der Wurfscheibe zum Reduzieren der erfassten Ungleichmäßigkeiten in der Nährstoffverteilung und/oder das Einstellen einer geeigneten Anordnung und/oder Ausrichtung von einer oder mehreren an der Wurfscheibe angeordneten Wurfschaufeln zum Reduzieren der erfassten Ungleichmäßigkeiten in der Nährstoffverteilung umfasst. Durch eine Steigerung der Rotationsgeschwindigkeit der Wurfscheibe kann beispielsweise die Abwurfweite erhöht werden. Durch eine Reduzierung der Rotationsgeschwindigkeit der Wurfscheibe kann beispielsweise die Abwurfweite verkleinert werden. Durch das Einstellen der Anordnung und/oder Ausrichtung von einer oder mehreren Wurfschaufeln kann die Mengenverteilung über die Abwurfweite angepasst werden. Üblicherweise verringert sich die applizierte Düngermenge mit zunehmendem Abstand von der landwirtschaftlichen Verteilmaschine, sodass die Mengenverteilung in Querrichtung einer Dreiecksform entspricht. Insbesondere über die Einstellung der Anordnung und/oder Ausrichtung von Wurfschaufeln lassen sich auch andere Querverteilungscharakteristiken umsetzen. Alternativ oder zusätzlich umfasst das Anpassen von Streuparametern der Verteilmaschine das Einstellen eines geeigneten Aufgabepunkts des Ausgleichsdüngers auf die Wurfscheibe zum Reduzieren der erfassten Ungleichmäßigkeiten in der Nährstoffverteilung und/oder das Einstellen einer geeigneten Menge an Ausgleichsdünger zum Reduzieren der erfassten Ungleichmäßigkeiten in der Nährstoffverteilung. Durch das Einstellen eines geeigneten Aufgabepunkts des Ausgleichsdüngers auf die Wurfscheibe kann ebenfalls die Abwurfcharakteristik beeinflusst werden. Das Einstellen einer geeigneten Menge an Ausgleichsdünger zum Reduzieren der erfassten Ungleichmäßigkeiten in der Nährstoffverteilung erfolgt vorzugsweise über eine selbsttätige Steuerung einer Dosiereinrichtung der landwirtschaftlichen Verteilmaschine.

Im erfindungsgemäßen Verfahren wird beim Planen und/oder Ausführen des ersten Ausbringvorgangs bereits berücksichtigt, dass der zweite Ausbringvorgang zum Reduzieren von Ungleichmäßigkeiten in der Nährstoffverteilung notwendig sein wird. Dies bedeutet, dass die Streuparameter der Verteilmaschine bereits für den ersten Ausbringvorgang derart angepasst werden, dass eine maximale Reduzierung der Ungleichmäßigkeiten im zweiten Ausbringvorgang erfolgen kann. Die Zusammensetzung der Düngermischung kann bereits für den ersten Ausbringvorgang derart angepasst werden, dass eine maximale Reduzierung der Ungleichmäßigkeiten im zweiten Ausbringvorgang erfolgen kann. Ferner kann auch der Maschinenbediener informiert werden, dass die Ausbringung einer ausgewählten Düngermischung in dem ersten Ausbringvorgang nachteilig ist, beispielsweise da die Wurf- und/oder Flugeigenschaften der Düngersorten zu unterschiedlich sind und die Ungleichmäßigkeiten in einem zweiten Ausbringvorgang nicht ausreichend ausgeglichen werden können.

Vorteilhaft ist ferner eine landwirtschaftliche Verteilmaschine mit einer Verteileinrichtung zum Ausbringen von Dünger und einer Auswerteeinrichtung, welche dazu eingerichtet ist, Ungleichmäßigkeiten in der Nährstoffverteilung zumindest eines ersten Nährstoffs einer Düngermischung entsprechend eines geplanten und/oder ausgeführten ersten Ausbringvorgangs zur Ausbringung der Düngermischung zu erfassen, wobei die landwirtschaftliche Verteilmaschine dazu eingerichtet ist, das Verfahren zum Planen und/oder Ausführen eines Düngungsvorgangs nach einer der vorstehend beschriebenen Ausführungsformen auszuführen. Hinsichtlich der Vorteile und Modifikationen der erfindungsgemäßen landwirtschaftlichen Verteilmaschine wird zunächst auf die Vorteile und Modifikationen des erfindungsgemäßen Verfahrens verwiesen.

In einer bevorzugten Ausführungsform weist die landwirtschaftliche Verteilmaschine eine Ausgabevorrichtung auf, welche dazu eingerichtet ist, die Nährstoffverteilung zumindest des ersten Nährstoffs der Düngermischung entsprechend des geplanten und/oder ausgeführten ersten Ausbringvorgangs auszugeben, insbesondere anzuzeigen, einen Fahrgassenvorschlag für den zweiten Ausbringvorgang auszugeben, insbesondere anzuzeigen, und/oder einen Einstellungsvorschlag für die Streuparameter für den zweiten Ausbringvorgang auszugeben, insbesondere anzuzeigen. Insbesondere ist die Ausgabevorrichtung als Display oder Touchscreen ausgebildet. Die Ausgabevorrichtung kann beispielsweise ein Bestandteil eines mobilen Endgeräts sein, sodass dem Maschinenbediener die Nährstoffverteilung zumindest des ersten Nährstoffs, der Fahrgassenvorschlag für den zweiten Ausbringvorgang und/oder der Einstellungsvorschlag für die Streuparameter für den zweiten Ausbringvorgang im Führerhaus einer die landwirtschaftliche Verteilmaschine ziehenden oder tragenden Maschine angezeigt werden können. Alternativ kann durch die Anzeige der Nährstoffverteilung zumindest des ersten Nährstoffs, des Fahrgassenvorschlags für den zweiten Ausbringvorgang und/oder des Einstellungsvorschlags für die Streuparameter für den zweiten Ausbringvorgang auf einem mobilen Endgerät der zweite Ausbringvorgang entfernt von der landwirtschaftlichen Verteilmaschine, beispielsweise in der Betriebsstätte eines Landwirts, geplant werden.

In einer anderen bevorzugten Ausführungsform der landwirtschaftlichen Verteilmaschine ist die Auswerteeinrichtung dazu eingerichtet, ein Steuersignal zur Anpassung von Streuparametern der landwirtschaftlichen Verteilmaschine auf Grundlage der erfassten Ungleichmäßigkeiten in der Nährstoffverteilung zumindest des ersten Nährstoffs der Düngermischung zu erzeugen. Hierzu kann die Auswerteeinrichtung dazu eingerichtet, auf Basis der erfassten Ungleichmäßigkeiten in der Nährstoffverteilung zumindest des ersten Nährstoffs der Düngermischung und den Wurf- und/oder Flugeigenschaften des Ausgleichsdüngers eine für den zweiten Ausbringvorgang geeignete Rotationsgeschwindigkeit der Wurfscheibe, eine für den zweiten Ausbringvorgang geeignete Ausrichtung oder Anordnung von Wurfschaufeln, einen für den zweiten Ausbringvorgang geeigneten Aufgabepunkt des Düngers auf die Wurfscheibe und/oder eine für den zweiten Ausbringvorgang geeignete Düngermenge zu bestimmen.

Außerdem ist eine landwirtschaftliche Verteilmaschine bevorzugt, welche eine Steuerungseinrichtung aufweist, welche dazu eingerichtet ist, Streuparameter der landwirtschaftlichen Verteilmaschine auf Grundlage des erzeugten Steuerungssignals selbsttätig anzupassen und/oder die Verteilmaschine oder eine die Verteilmaschine ziehende oder tragende Maschine zur Einhaltung einer zum Reduzieren der erfassten Ungleichmäßigkeiten in der Nährstoffverteilung geeigneten Fahrgasse selbsttätig zu steuern.

Weitere Einzelheiten der Erfindung sind der Figurenbeschreibung und den Zeichnungen zu entnehmen. Es zeigen
- Fig. 1: eine landwirtschaftliche Verteilmaschine während des erfindungsgemäßen Ausführens eines ersten Ausbringvorgangs zur Ausbringung einer Düngermischung in einer schematischen Darstellung;
- Fig. 2: die landwirtschaftliche Verteilmaschine aus der Fig. 1 während des erfindungsgemäßen Ausführens eines zweiten Ausbringvorgangs zur Ausbringung eines Ausgleichsdüngers in einer schematischen Darstellung;
- Fig. 3: eine landwirtschaftliche Verteilmaschine während des erfindungsgemäßen Ausführens eines ersten Ausbringvorgangs zur Ausbringung einer Düngermischung in einer schematischen Darstellung; und
- Fig. 4: die landwirtschaftliche Verteilmaschine aus der Fig. 3 während des erfindungsgemäßen Ausführens eines zweiten Ausbringvorgangs zur Ausbringung eines Ausgleichsdüngers in einer schematischen Darstellung.

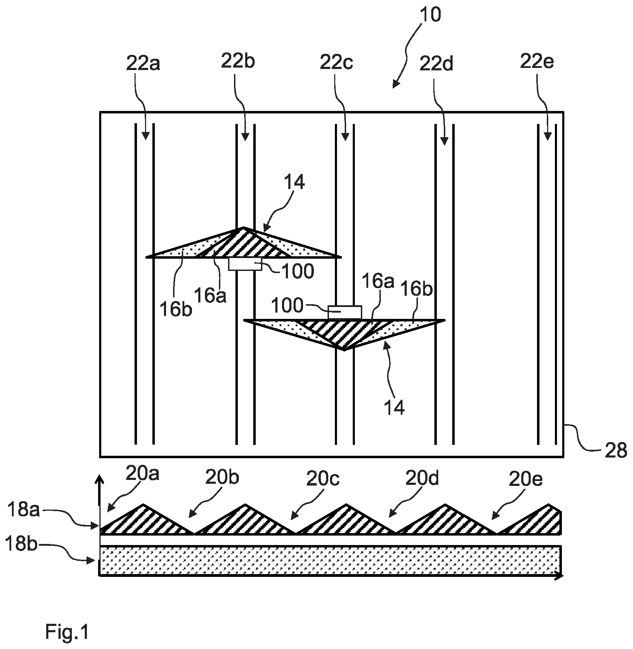

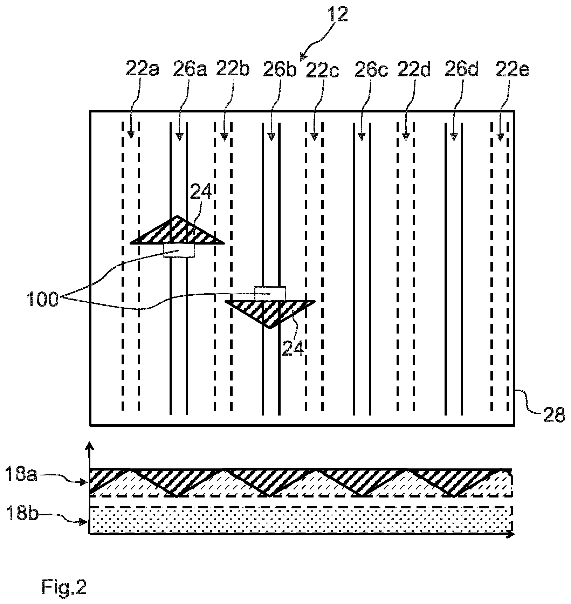

Die Fig. 1 und die Fig. 2 zeigen eine landwirtschaftliche Verteilmaschine 100 beim Ausführen eines Düngungsvorgangs auf einem Feld 28.

In der Fig. 1 führt die landwirtschaftliche Verteilmaschine 100 einen ersten Ausbringvorgang 10 zur Ausbringung einer Düngermischung 14 aus. Die Düngermischung 14 umfasst zwei Düngersorten 16a, 16b. Die erste Düngersorte 16a umfasst einen ersten Nährstoff und die zweite Düngersorte 16b umfasst einen zweiten Nährstoff, wobei sich der erste Nährstoff der ersten Düngersorte 16a von dem zweiten Nährstoff der zweiten Düngersorte 16b unterscheidet. Folglich werden durch die Düngermischung 14 zwei unterschiedliche Nährstoffe ausgebracht.

Die Körner der Düngersorte 16a sind im Vergleich zu den Körnern der Düngersorte 16b kleiner und leichter, sodass die Düngersorten 16a, 16b unterschiedliche Wurf- und Flugeigenschaften aufweisen. Bei dem ersten Ausbringvorgang 10 sind die den Düngerauswurf beeinflussenden Streuparameter der Verteilmaschine 100 derart eingestellt, dass die Nährstoffverteilung 18a des ersten Nährstoffs Ungleichmäßigkeiten 20a-20e und die Nährstoffverteilung 18b des zweiten Nährstoffs keine Ungleichmäßigkeiten aufweist. Die Streuparameter der Verteilmaschine 100, welche den Düngerauswurf beeinflussen, sind beispielsweise die Rotationsgeschwindigkeit der Wurfscheibe, die Ausrichtung der auf der Wurfscheibe angeordneten Wurfschaufeln, der Aufgabepunkt des Düngers auf die Wurfscheibe und die Düngermenge.

Die ausgebrachte Menge des ersten Nährstoffs nimmt entsprechend der ausgebrachten Menge der ersten Düngersorte 16a mit zunehmendem Abstand von der jeweiligen Fahrgasse 22a-22e kontinuierlich bis auf null ab. Die erste Düngersorte 16a wird jedoch nicht ausreichend weit ausgeworfen, sodass sich beim Abfahren der Fahrgassen 22a-22e eine ungleichmäßige Verteilung des ersten Düngers 18a und somit auch des ersten Nährstoffs ergibt.

Die ausgebrachte Menge des zweiten Nährstoffs nimmt entsprechend der ausgebrachten Menge der zweiten Düngersorte 16b mit zunehmendem Abstand von der jeweiligen Fahrgasse 22a-22e bis zur jeweils benachbarten Fahrgasse 22a-22e kontinuierlich bis auf null ab. Beim Abfahren der Fahrgassen 22a-22e ergibt sich somit eine gleichmäßige Verteilung des zweiten Düngers 18b und somit auch des zweiten Nährstoffs.

Die Ungleichmäßigkeiten 20a-20e in der Nährstoffverteilung 18a des ersten Nährstoffs führen letztendlich zu einem Ertragsverlust, sodass diese Ungleichmäßigkeiten 20a-20e auszugleichen sind.

Hierzu weist die landwirtschaftliche Verteilmaschine 100 eine Auswerteeinrichtung und eine Steuerungseinrichtung auf.

Die Auswerteeinrichtung der landwirtschaftlichen Verteilmaschine 100 ist dazu eingerichtet, Ungleichmäßigkeiten 20a-20e in der Nährstoffverteilung 18a, 18b der ausgebrachten Nährstoffe der Düngermischung 14 zu erfassen und ein Steuerungssignal zur Anpassung der Streuparametern der landwirtschaftlichen Verteilmaschine 100 auf Grundlage der erfassten Ungleichmäßigkeiten 20a-20e in der Nährstoffverteilung 18a, 18b der ausgebrachten Nährstoffe der Düngermischung 14 zu erzeugen.

Die Steuerungseinrichtung ist dazu eingerichtet, die Streuparameter der landwirtschaftlichen Verteilmaschine 100 auf Grundlage des erzeugten Steuerungssignals selbsttätig anzupassen und die Verteilmaschine 100 zur Einhaltung einer zum Reduzieren der erfassten Ungleichmäßigkeiten 20a-20e in der Nährstoffverteilung 18a, 18b der ausgebrachten Nährstoffe der Düngermischung 14 geeigneten Fahrgasse 22a-22e, 26a-26d selbsttätig zu steuern.

Vorliegend hat die Auswerteeinrichtung der landwirtschaftlichen Verteilmaschine 100 Ungleichmäßigkeiten 20a-20e in der Nährstoffverteilung 18a des ersten Nährstoffs der Düngermischung 14 erfasst. Zum Erfassen der Ungleichmäßigkeiten 20a-20e in der Nährstoffverteilung 18a des ersten Nährstoffs der Düngermischung 14 wurden nach der Anpassung der Streuparameter auf die Wurf- und Flugeigenschaften der zweiten Düngersorte 16b der Düngermischung 14 mehrere Auffangbehältern auf einer Probefläche aufgestellt und eine Probeausbringung der Düngermischung 14 auf der Probefläche ausgeführt. Anschließend wurde der Inhalt der Auffangbehälter mittels der Auswerteeinrichtung ausgewertet, beispielsweise mittels einer Bildauswertungsroutine. Aus der Verteilung der ersten Düngersorte 16a und der zweiten Düngersorte 16b in den Auffangbehältern wurden die Nährstoffverteilungen 18a, 18b des ersten Nährstoffs und des zweiten Nährstoffs der Düngermischung 14 erfasst.

Optional können dem Maschinenbediener die erfassten Nährstoffverteilungen 18a, 18b über eine Ausgabevorrichtung graphisch angezeigt werden.

Die Fig. 2 zeigt die landwirtschaftliche Verteilmaschine 100 beim Ausführen eines zweiten Ausbringvorgangs 12 zur Ausbringung eines Ausgleichsdüngers 24. Der Ausgleichsdünger entspricht der ersten Düngersorte 16a der während des ersten Ausbringvorgangs ausgebrachten Düngermischung 14. Der zweite Ausbringvorgang 12 wird ausgeführt, um die erfassten Ungleichmäßigkeiten 20a-20e in der Nährstoffverteilung 18a zu reduzieren.

Vor dem Ausführen des zweiten Ausbringvorgangs 12 wurde geprüft, ob die Streuparameter der Verteilmaschine 100 für den zweiten Ausbringvorgang 12 anzupassen sind. Die Auswertung der erfassten Ungleichmäßigkeiten 20a-20e ergab jedoch, dass ein Ausgleich ohne Anpassung der Streuparameter der landwirtschaftlichen Verteilmaschine 100, sondern durch Ausbringen des Ausgleichdüngers 24 von versetzten Fahrgassen 26a-26d aus erfolgen kann. Entsprechend wird die landwirtschaftliche Verteilmaschine 100 in der Fig. 2 derart selbsttätig gesteuert, dass die zum Reduzieren der erfassten Ungleichmäßigkeiten 20a-20e geeigneten Fahrgassen 26a-26d eingehalten werden.

Der Ausgleich der Ungleichmäßigkeiten 20a-20e in der Nährstoffverteilung 18a konnte in einem besonders hohen Maße erfolgen, da beim Ausführen des ersten Ausbringvorgangs 10 bereits berücksichtigt wurde, dass der zweite Ausbringvorgang 12 zum Reduzieren von Ungleichmäßigkeiten 20a-20e in der Nährstoffverteilung 18a notwendig sein wird. Demnach wurden die Streuparameter der landwirtschaftlichen Verteilmaschine 100 bereits für den ersten Ausbringvorgang 10 derart angepasst, dass eine maximale Reduzierung der Ungleichmäßigkeiten 20a-20e im zweiten Ausbringvorgang 12 erfolgen kann.

Alternativ zu der selbsttätigen Steuerung der landwirtschaftlichen Verteilmaschine, hätten dem Maschinenbediener auch ein Fahrgassenvorschlag für den zweiten Ausbringvorgang 12 und ein Einstellungsvorschlag für die Streuparameter für den zweiten Ausbringvorgang 12 angezeigt werden können.

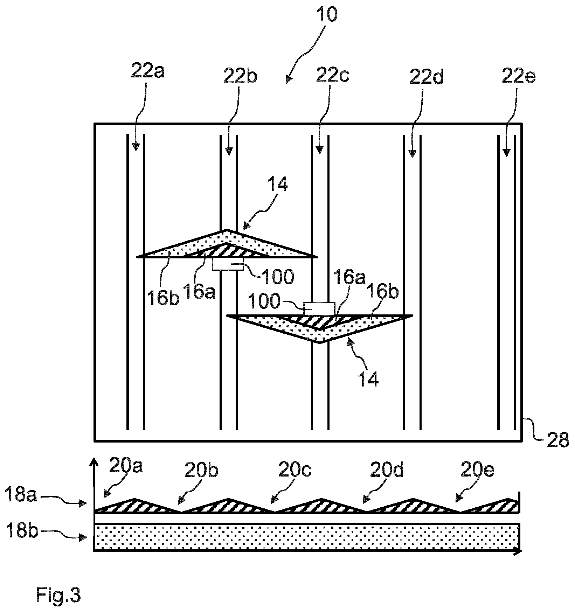

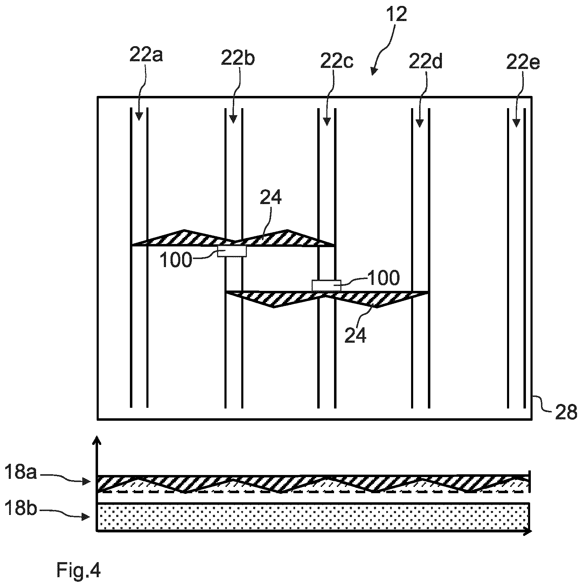

Die Fig. 3 und die Fig. 4 zeigen ebenfalls eine landwirtschaftliche Verteilmaschine 100 beim Ausführen eines Düngungsvorgangs auf einem Feld 28.

In der Fig. 3 führt die landwirtschaftliche Verteilmaschine 100 analog zu der in der Fig. 1 dargestellten landwirtschaftlichen Verteilmaschine 100 einen ersten Ausbringvorgang 10 zur Ausbringung einer Düngermischung 14 aus, wobei sich die Querverteilung der ersten Düngersorte 16a und somit auch die Querverteilung des ausgebrachten ersten Nährstoffs von der in der Fig. 1 dargestellten Querverteilung des ersten Nährstoffs unterscheidet.

In dem dargestellten Ausführungsbeispiel hat der Maschinenbediener vor dem Ausführen des ersten Ausbringvorgangs die auszubringende Düngermischung 14 über eine Eingabeeinrichtung ausgewählt. Die Auswerteeinrichtung der landwirtschaftlichen Verteilmaschine hat dann die Wurf- und Flugeigenschaften der Düngersorten 16a, 16b der ausgewählten Düngermischung 14 von einem Speicher abgerufen, um geeignete Streuparameter zur gleichmäßigen Ausbringung des zweiten Nährstoffs der zweiten Düngersorte 16b zu ermitteln. Unter Berücksichtigung der Wurf- und Flugeigenschaften der ersten Düngersorte 16a und unter Berücksichtigung der ermittelten Streuparameter der landwirtschaftlichen Verteilmaschine 100 wurden dann die sich ergebenden Ungleichmäßigkeiten 20a-20e in der Nährstoffverteilung 18a des ersten Nährstoffs berechnet.

Die Fig. 4 zeigt die landwirtschaftliche Verteilmaschine 100 beim Ausführen eines zweiten Ausbringvorgangs 12 zur Ausbringung eines Ausgleichsdüngers 24. Der Ausgleichsdünger entspricht weder der ersten Düngersorte 16a noch der zweiten Düngersorte 16b der während des ersten Ausbringvorgangs 10 ausgebrachten Düngermischung 14. Vielmehr handelt es sich bei dem Ausgleichsdünger 24 um eine andere Düngersorte, welche jedoch auch den ersten Nährstoff beinhaltet, welcher auch Bestandteil der ersten Düngersorte 16a der während des ersten Ausbringvorgangs 10 ausgebrachten Düngermischung 14 war. Der zweite Ausbringvorgang 12 wird ausgeführt, um die erfassten Ungleichmäßigkeiten 20a-20e in der Nährstoffverteilung 18a des ersten Nährstoffs zu reduzieren.

Die landwirtschaftliche Verteilmaschine 100 benutzt nunmehr die gleichen Fahrgassen 22a-22e wie während des ersten Ausbringvorgangs 10. Jedoch wurden die Streuparameter der Verteilmaschine 100 derart angepasst, dass sich eine gänzlich andere Querverteilung des Ausgleichsdüngers 24 ergibt. Damit die berechneten Ungleichmäßigkeiten 20a-20e in der Nährstoffverteilung 18a des ersten Nährstoffs in dem zweiten Ausbringvorgang 12 ausgeglichen werden können, wurde die Rotationsgeschwindigkeit der Wurfscheibe, die Ausrichtung von zwei an der Wurfscheibe angeordneten Wurfschaufeln, der Aufgabepunkt des Ausgleichdüngers auf die Wurfscheibe und die auf die Wurfscheibe aufgegebene Menge an Ausgleichsdünger 24 zum Reduzieren der Ungleichmäßigkeiten 20a-20e in der Nährstoffverteilung 18a des ersten Nährstoffs entsprechend angepasst.

Die landwirtschaftliche Verteilmaschine 100 kann zusätzlich dazu eingerichtet sein, eine spektrale Analyse des Pflanzenbestands vor oder während dem Ausführen des zweiten Ausbringvorgangs 12 durchzuführen. Da die Reflexions-Eigenschaften von Pflanzenbeständen von dem Nährstoff-Ernährungszustand beeinflusst werden, können beispielsweise über die Auswertung von Lichtmessungen Ungleichmäßigkeiten in der Nährstoffverteilung erfasst und bei der Ausbringung des Ausgleichsdüngers berücksichtigt werden.

### Bezugszeichenliste

- 10: erster Ausbringvorgang
- 12: zweiter Ausbringvorgang
- 14: Düngermischung
- 16a, 16b: Düngersorten
- 18a, 18b: Nährstoffverteilungen
- 20a-20e: Ungleichmäßigkeiten
- 22a-22e: Fahrgassen
- 24: Ausgleichsdünger
- 26a-26d: Fahrgassen
- 28: Feld

- 100: landwirtschaftliche Verteilmaschine

## Patentansprüche

1. Verfahren zum Planen und/oder Ausführen eines Düngungsvorgangs, mit den Schritten:
- Planen und/oder Ausführen eines ersten Ausbringvorgangs (10) zur Ausbringung einer Düngermischung (14) aus zumindest zwei Düngersorten (16a, 16b), wobei die Düngermischung (14) zumindest zwei Nährstoffe umfasst; und
- Erfassen von Ungleichmäßigkeiten (20a-20e) in der Nährstoffverteilung (18a, 18b) zumindest eines ersten Nährstoffs der Düngermischung (14) entsprechend des geplanten und/oder ausgeführten ersten Ausbringvorgangs (10) durch eine Auswerteeinrichtung;
**gekennzeichnet durch** den Schritt:
- Planen und/oder Ausführen eines zweiten Ausbringvorgangs (12) zur Ausbringung eines Ausgleichsdüngers (24) zum Reduzieren der erfassten Ungleichmäßigkeiten (20a-20e) in der Nährstoffverteilung (18a, 18b), wobei der Ausgleichsdünger (24) zumindest den ersten Nährstoff umfasst, wobei beim Planen und/oder Ausführen des ersten Ausbringvorgangs (10) berücksichtigt wird, dass der zweite Ausbringvorgang (12) zum Reduzieren von Ungleichmäßigkeiten (20a-20e) in der Nährstoffverteilung (18a, 18b) notwendig sein wird und die Streuparameter einer Verteilmaschine bereits für den ersten Ausbringvorgang derart angepasst werden, dass eine maximale Reduzierung der Ungleichmäßigkeiten im zweiten Ausbringvorgang erfolgen kann.

2. Verfahren nach Anspruch 1,
**dadurch gekennzeichnet, dass** das Planen und/oder Ausführen des ersten Ausbringvorgangs (10) zumindest einen der folgenden Schritte umfasst:
- Eingeben oder Auswählen einer Düngermischung (14) an einer landwirtschaftlichen Verteilmaschine, einer Zug- oder Trägermaschine der landwirtschaftlichen Verteilmaschine oder von einem externen Gerät;
- Eingeben oder Auswählen der zumindest zwei Düngersorten (16a, 16b) der Düngermischung (14) an einer landwirtschaftlichen Verteilmaschine, einer Zug- oder Trägermaschine der landwirtschaftlichen Verteilmaschine oder von einem externen Gerät.

3. Verfahren nach Anspruch 1 oder 2,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) zumindest einen der folgenden Schritte umfasst:
- Anordnen von einem oder mehreren Auffangbehältern auf einer Probefläche;
- Ausführen einer Probeausbringung der Düngermischung (14) auf der Probefläche;
- Auswerten des Inhalts des einen oder der mehreren Auffangbehälter nach dem Ausführen der Probeausbringung.

4. Verfahren nach einem der vorstehenden Ansprüche,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des ausgeführten ersten Ausbringvorgangs (10) den folgenden Schritt umfasst:
- Ausführen einer spektralen Analyse des Pflanzenbestands vor oder während dem Planen und/oder Ausführen des zweiten Ausbringvorgangs (12).

5. Verfahren nach einem der vorstehenden Ansprüche,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) zumindest einen der folgenden Schritte umfasst:
- Bereitstellen von Streuparametern der Verteilmaschine, welche den Düngerauswurf beeinflussen, für eine Auswerteeinrichtung;
- Bereitstellen von Wurf- und/oder Flugeigenschaften der Düngermischung (14) für eine Auswerteeinrichtung;
- Bereitstellen von Wurf- und/oder Flugeigenschaften der zumindest zwei Düngersorten (16a, 16b) für eine Auswerteeinrichtung.

6. Verfahren nach Anspruch 5,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) den folgenden Schritt umfasst:
- Berechnen der Ungleichmäßigkeiten (20a-20e) in der Nährstoffverteilung (18a, 18b) zumindest des ersten Nährstoffs der Düngermischung (14) unter Berücksichtigung der bereitgestellten Streuparameter, der bereitgestellten Wurf- und/oder Flugeigenschaften der Düngermischung (14) und/oder der bereitgestellten Wurf- und/oder Flugeigenschaften der zumindest zwei Düngersorten (16a, 16b) durch die Auswerteeinrichtung.

7. Verfahren nach einem der vorstehenden Ansprüche,
**dadurch gekennzeichnet, dass** das Ausführen des zweiten Ausbringvorgangs (12) zumindest einen der folgenden Schritte umfasst:
- Anzeigen der Nährstoffverteilung (18a, 18b) zumindest des ersten Nährstoffs der Düngermischung (14) entsprechend des geplanten und/oder ausgeführten ersten Ausbringvorgangs (10);
- Anzeigen eines Fahrgassenvorschlags für den zweiten Ausbringvorgang (12);
- Anzeigen eines Einstellungsvorschlags für die Streuparameter der Verteilmaschine (100) für den zweiten Ausbringvorgang (12).

8. Verfahren nach einem der vorstehenden Ansprüche,
**dadurch gekennzeichnet, dass** das Ausführen des zweiten Ausbringvorgangs (12) zumindest einen der folgenden Schritte umfasst:
- Erzeugen eines Steuerungssignals zur Anpassung von Streuparametern der Verteilmaschine (100) auf Grundlage der erfassten Ungleichmäßigkeiten (20a-20e) in der Nährstoffverteilung (18a, 18b);
- selbsttätiges Anpassen von Streuparametern der Verteilmaschine (100) auf Grundlage des erzeugten Steuerungssignals;
- selbsttätiges Steuern der Verteilmaschine (100) oder einer die Verteilmaschine (100) tragenden oder ziehenden Maschine zur Einhaltung einer zum Reduzieren der erfassten Ungleichmäßigkeiten (20a-20e) geeigneten Fahrgasse (22a-22e, 26a-26d).

9. Verfahren nach Anspruch 8,
**dadurch gekennzeichnet, dass** das Anpassen von Streuparametern der Verteilmaschine (100) zumindest einen der folgenden Schritte umfasst:
- Einstellen einer geeigneten Rotationsgeschwindigkeit einer Wurfscheibe zum Reduzieren der erfassten Ungleichmäßigkeiten (20a-20e) in der Nährstoffverteilung (18a, 18b);
- Einstellen einer geeigneten Anordnung und/oder Ausrichtung von einer oder mehreren an einer Wurfscheibe angeordneten Wurfschaufeln zum Reduzieren der erfassten Ungleichmäßigkeiten (20a-20e) in der Nährstoffverteilung (18a, 18b);
- Einstellen eines geeigneten Aufgabepunkts des Ausgleichdüngers auf eine Wurfscheibe zum Reduzieren der erfassten Ungleichmäßigkeiten (20a-20e) in der Nährstoffverteilung (18a, 18b);
- Einstellen einer geeigneten Menge an Ausgleichsdünger (24) zum Reduzieren der erfassten Ungleichmäßigkeiten (20a-20e) in der Nährstoffverteilung (18a, 18b).

10. Verfahren nach einem der vorstehenden Ansprüche,
**dadurch gekennzeichnet, dass** die Zusammensetzung der Düngermischung für den ersten Ausbringvorgang derart angepasst wird, dass eine maximale Reduzierung der Ungleichmäßigkeiten im zweiten Ausbringvorgang erfolgen kann.

11. Verfahren nach einem der vorstehenden Ansprüche,
**dadurch gekennzeichnet, dass** der Maschinenbediener informiert wird, dass die Ausbringung einer ausgewählten Düngermischung in dem ersten Ausbringvorgang nachteilig ist, da die Wurf- und/oder Flugeigenschaften der Düngersorten zu unterschiedlich sind und die Ungleichmäßigkeiten in einem zweiten Ausbringvorgang nicht ausreichend ausgeglichen werden können.

## Claims

1. Method for planning and/or executing a fertilization process, comprising the steps of:
- planning and/or executing a first application process (10) for applying a fertilizer mixture (14) comprising at least two types of fertilizer (16a, 16b), the fertilizer mixture (14) comprising at least two nutrients; and
- detecting irregularities (20a-20e) in the nutrient distribution (18a, 18b) of at least one first nutrient of the fertilizer mixture (14) according to the planned and/or executed first application process (10) using an evaluation device;
**characterized by** the step of:
- planning and/or executing a second application process (12) for applying a compensating fertilizer (24) for reducing the detected irregularities (20a-20e) in the nutrient distribution (18a, 18b), the compensating fertilizer (24) comprising at least the first nutrient, it being taken into account when planning and/or executing the first application process (10) that the second application process (12) will be necessary for reducing irregularities (20a-20e) in the nutrient distribution (18a, 18b) and the spreading parameters of a distribution machine already being adapted for the first application process in such a way that a maximum reduction of the irregularities can be achieved in the second application process.

2. Method according to claim 1,
**characterized in that** the planning and/or execution of the first application process (10) comprises at least one of the following steps:
- inputting or selecting a fertilizer mixture (14) on an agricultural distribution machine, a tractor or carrier machine of the agricultural distribution machine or from an external apparatus;
- inputting or selecting the at least two types of fertilizer (16a, 16b) of the fertilizer mixture (14) on an agricultural distribution machine, a tractor or carrier machine of the agricultural distribution machine or from an external apparatus.

3. Method according to claim 1 or 2,
**characterized in that** the detection of irregularities (20a-20e) in the nutrient distribution (18a, 18b) of at least the first nutrient of the fertilizer mixture (14) according to the planned and/or executed first application process (10) comprises at least one of the following steps:
- arranging one or more collection containers on a sample area;
- executing a sample application of the fertilizer mixture (14) on the sample area;
- evaluating the contents of the one or more collection containers after executing the sample application.

4. Method according to any of the preceding claims,
**characterized in that** the detection of irregularities (20a-20e) in the nutrient distribution (18a, 18b) of at least the first nutrient of the fertilizer mixture (14) according to the executed first application process (10) comprises the following step:
- executing a spectral analysis of the crop before or during the planning and/or execution of the second application process (12).

5. Method according to any of the preceding claims,
**characterized in that** the detection of irregularities (20a-20e) in the nutrient distribution (18a, 18b) of at least the first nutrient of the fertilizer mixture (14) according to the planned and/or executed first application process (10) comprises at least one of the following steps:
- providing spreading parameters of the distribution machine, which influence the fertilizer ejection, for an evaluation device;
- providing throwing and/or flight properties of the fertilizer mixture (14) for an evaluation device;
- providing throwing and/or flight properties of the at least two types of fertilizer (16a, 16b) for an evaluation device.

6. Method according to claim 5,
**characterized in that** the detection of irregularities (20a-20e) in the nutrient distribution (18a, 18b) of at least the first nutrient of the fertilizer mixture (14) according to the planned and/or executed first application process (10) comprises the following step:
- calculating the irregularities (20a-20e) in the nutrient distribution (18a, 18b) of at least the first nutrient of the fertilizer mixture (14) taking into account the provided spreading parameters, the provided throwing and/or flight properties of the fertilizer mixture (14) and/or the provided throwing and/or flight properties of the at least two types of fertilizer (16a, 16b) using the evaluation device.

7. Method according to any of the preceding claims,
**characterized in that** the execution of the second application process (12) comprises at least one of the following steps:
- displaying the nutrient distribution (18a, 18b) of at least the first nutrient of the fertilizer mixture (14) according to the planned and/or executed first application process (10);
- displaying a travel path suggestion for the second application process (12);
- displaying a setting suggestion for the spreading parameters of the distribution machine (100) for the second application process (12).

8. Method according to any of the preceding claims,
**characterized in that** the execution of the second application process (12) comprises at least one of the following steps:
- generating a control signal for adjusting spreading parameters of the distribution machine (100) on the basis of the detected irregularities (20a-20e) in the nutrient distribution (18a, 18b);
- automatically adjusting spreading parameters of the distribution machine (100) on the basis of the generated control signal;
- automatically controlling the distribution machine (100) or a machine carrying or pulling the distribution machine (100) to maintain a travel path (22a-22e, 26a-26d) suitable for reducing the detected irregularities (20a-20e).

9. Method according to claim 8,
**characterized in that** the adjustment of spreading parameters of the distribution machine (100) comprises at least one of the following steps:
- setting a suitable rotation speed of a throwing disk to reduce the detected irregularities (20a-20e) in the nutrient distribution (18a, 18b);
- setting a suitable arrangement and/or orientation of one or more throwing blades arranged on a throwing disk to reduce the detected irregularities (20a-20e) in the nutrient distribution (18a, 18b);
- setting a suitable application point of the compensating fertilizer on a throwing disk to reduce the detected irregularities (20a-20e) in the nutrient distribution (18a, 18b);
- setting a suitable amount of compensating fertilizer (24) to reduce the detected irregularities (20a-20e) in the nutrient distribution (18a, 18b).

10. Method according to any of the preceding claims,
**characterized in that** the composition of the fertilizer mixture for the first application process is adjusted in such a way that a maximum reduction of irregularities can be achieved in the second application process.

11. Method according to any of the preceding claims,
**characterized in that** the machine operator is informed that the application of a selected fertilizer mixture in the first application process is disadvantageous because the throwing and/or flight properties of the fertilizer types are too different and the irregularities cannot be sufficiently compensated in a second application process.

## Revendications

1. Procédé permettant la planification et/ou l'exécution d'un processus de fertilisation, comprenant les étapes consistant à :
- planifier et/ou exécuter un premier processus d'épandage (10) destiné à épandre un mélange (14) d'engrais constitué d'au moins deux types d'engrais (16a, 16b), le mélange (14) d'engrais comprenant au moins deux nutriments ; et
- détecter des irrégularités (20a-20e) dans la distribution (18a, 18b) des nutriments au moins d'un premier nutriment du mélange (14) d'engrais selon le premier processus d'épandage (10) planifié et/ou exécuté par un dispositif d'évaluation ;
**caractérisé par** l'étape consistant à :
- planifier et/ou exécuter un second processus d'épandage (12) destiné à épandre un engrais de compensation (24) pour la réduction des irrégularités (20a-20e) détectées dans la distribution (18a, 18b) des nutriments, l'engrais de compensation (24) comprenant au moins le premier nutriment, dans lequel, lors de la planification et/ou de l'exécution du premier processus d'épandage (10), on prend en compte que le second processus d'épandage (12) pour la réduction des irrégularités (20a-20e) dans la distribution (18a, 18b) des nutriments sera nécessaire et les paramètres de dispersion d'une machine de distribution sont déjà adaptés pour le premier processus d'épandage de telle sorte qu'une réduction maximale des irrégularités peut avoir lieu dans le second processus d'épandage.

2. Procédé selon la revendication 1,
**caractérisé en ce que** la planification et/ou l'exécution du premier processus d'épandage (10) comprend au moins l'une des étapes suivantes :
- introduction ou sélection d'un mélange (14) d'engrais sur une machine de distribution agricole, un engin tracteur ou porteur de la machine de distribution agricole ou à partir d'un appareil externe ;
- introduction ou sélection des au moins deux types d'engrais (16a, 16b) du mélange (14) d'engrais sur une machine de distribution agricole, un engin tracteur ou porteur de la machine de distribution agricole ou à partir d'un appareil externe.

3. Procédé selon la revendication 1 ou 2,
**caractérisé en ce que** la détection d'irrégularités (20a-20e) dans la distribution (18a, 18b) des nutriments au moins du premier nutriment du mélange (14) d'engrais selon le premier processus d'épandage (10) planifié et/ou exécuté comprend au moins l'une des étapes suivantes :
- disposition d'un ou plusieurs conteneurs de collecte sur une zone d'essai ;
- exécution d'un essai d'épandage du mélange (14) d'engrais sur la zone d'essai ;
- évaluation du contenu du ou des récipients de collecte après l'exécution de l'essai d'épandage.

4. Procédé selon l'une des revendications précédentes,
**caractérisé en ce que** la détection d'irrégularités (20a-20e) dans la distribution (18a, 18b) des nutriments au moins du premier nutriment du mélange (14) d'engrais selon le premier processus d'épandage (10) exécuté comprend l'étape suivante :
- exécution d'une analyse spectrale de la végétation avant ou pendant la planification et/ou l'exécution du second processus d'épandage (12).

5. Procédé selon l'une des revendications précédentes,
**caractérisé en ce que** la détection d'irrégularités (20a-20e) dans la distribution (18a, 18b) des nutriments au moins du premier nutriment du mélange (14) d'engrais selon le premier processus d'épandage (10) planifié et/ou exécuté comprend au moins l'une des étapes suivantes :
- mise à disposition de paramètres de dispersion de la machine de distribution, qui influencent l'éjection d'engrais, pour un dispositif d'évaluation ;
- mise à disposition de propriétés de projection et/ou de vol du mélange (14) d'engrais pour un dispositif d'évaluation ;
- mise à disposition de propriétés de projection et/ou de vol des au moins deux types d'engrais (16a, 16b) pour un dispositif d'évaluation.

6. Procédé selon la revendication 5,
**caractérisé en ce que** la détection d'irrégularités (20a-20e) dans la distribution (18a, 18b) des nutriments au moins du premier nutriment du mélange (14) d'engrais selon le premier processus d'épandage (10) planifié et/ou exécuté comprend l'étape suivante :
- calcul des irrégularités (20a-20e) dans la distribution (18a, 18b) des nutriments au moins du premier nutriment du mélange (14) d'engrais compte tenu des paramètres de dispersion mis à disposition, des propriétés de projection et/ou de vol du mélange (14) d'engrais mises à disposition et/ou des propriétés de projection et/ou de vol des au moins deux types d'engrais (16a, 16b) mises à disposition par le dispositif d'évaluation.

7. Procédé selon l'une des revendications précédentes,
**caractérisé en ce que** l'exécution du second processus d'épandage (12) comprend au moins l'une des étapes suivantes :
- affichage de la distribution (18a, 18b) des nutriments au moins du premier nutriment du mélange (14) d'engrais selon le premier processus d'épandage planifié et/ou exécuté (10) ;
- affichage d'une suggestion de trajet pour le second processus d'épandage (12) ;
- affichage d'une suggestion de réglage pour les paramètres de dispersion de la machine de distribution (100) pour le second processus d'épandage (12).

8. Procédé selon l'une des revendications précédentes,
**caractérisé en ce que** l'exécution du second processus d'épandage (12) comprend au moins l'une des étapes suivantes :
- génération d'un signal de commande destiné à adapter les paramètres d'épandage de la machine de distribution (100) sur la base des irrégularités détectées (20a-20e) dans la distribution (18a, 18b) des nutriments ;
- adaptation automatique de paramètres de dispersion de la machine de distribution (100) sur la base du signal de commande généré ;
- commande automatique de la machine de distribution (100) ou d'un engin porteur ou tracteur de la machine de distribution (100) pour le respect d'un trajet (22a-22e, 26a-26d) approprié pour la réduction des irrégularités détectées (20a-20e).

9. Procédé selon la revendication 8,
**caractérisé en ce que** l'adaptation des informations de dispersion de la machine de distribution (100) comprend au moins l'une des étapes suivantes :
- réglage d'une vitesse de rotation appropriée d'un disque de projection pour la réduction des irrégularités détectées (20a-20e) dans la distribution (18a, 18b) des nutriments ;
- réglage d'une disposition et/ou d'une orientation appropriée(s) d'une ou de plusieurs palettes de projection disposées sur un disque de projection pour la réduction des irrégularités détectées (20a-20e) dans la distribution (18a, 18b) des nutriments ;
- réglage d'un point d'application approprié de l'engrais de compensation sur un disque d'épandage pour la réduction des irrégularités détectées (20a-20e) dans la distribution (18a, 18b) des nutriments ;
- réglage d'une quantité appropriée d'engrais de compensation (24) pour la réduction des irrégularités détectées (20a-20e) dans la distribution (18a, 18b) des nutriments.

10. Procédé selon l'une des revendications précédentes,
**caractérisé en ce que** la composition du mélange d'engrais pour le premier processus d'épandage est adaptée de telle sorte qu'une réduction maximale des irrégularités peut être obtenue dans le second processus d'épandage.

11. Procédé selon l'une des revendications précédentes,
**caractérisé en ce que** l'opérateur de la machine est informé du fait que l'épandage d'un mélange d'engrais sélectionné dans le premier processus d'épandage est désavantageux car les caractéristiques de projection et/ou de vol des types d'engrais sont trop différentes et que les irrégularités n'ont pas pu être suffisamment compensées dans un second processus d'épandage.
